# FASCICULE DE BREVET EUROPEEN

(11) **EP 0 559 593 B1**
(45) Date de publication et mention de la délivrance du brevet: **13.05.1998**
(21) Numéro de dépôt: 93460005.7
(22) Date de dépôt: 11.02.1993
(51) Int. Cl.: H04L 29/06, H03M 7/30

(54) **Procédé et dispositif de compression et décompression de données pour un système de transmission**
Verfahren und Vorrichtung zur Datenkompression und -dekompression für eine Übertragungsanordnung
Method and apparatus for data compression and decompression for a transmission system

(30) Priorité: 11.02.1992 FR 9201657
(43) Date de publication de la demande: 08.09.1993
(73) Titulaire: OUEST STANDARD TELEMATIQUE S.A., 35510 Cesson Sevigne (FR)
(72) Inventeur: Lane, Thao, F-35000 Rennes (FR); Ernault, Jean-Marc, F-35000 Rennes (FR); Thepault, Bernard, F-35510 Cesson Sevigne (FR)
(74) Mandataire: Vidon, Patrice

(56) Documents cités:
- EP-A- 0 349 464
- EP-A- 0 429 054
- EP-A- 0 464 564
- BRITISH TELECOMMUNICATIONS ENGINEERING vol. 3, no. 2, Juillet 1984, LONDON GB
- pages 86 - 91 P.A.JENKINS ET AL 'OPENSYSTEMS INTERCONNECTION - AN INTRODUCTORY GUIDE'

## Description

Le domaine de l'invention est celui des systèmes de transmission de données, et plus précisément des systèmes de transmission structurés, dans lesquels les communications entre deux terminaux se font par échanges d'unités de données de protocole (en anglo-saxon : protocol data unit, ou PDU).

L'invention s'applique donc notamment à tous les systèmes de transmission par paquets (système mettant en oeuvre une procédure de niveau 3, selon le modèle de normalisation OSI à sept niveaux), mais également aux systèmes de transmission par trames (niveau 2) ou d'unités de données de protocole de transport (niveau 4). Plus généralement, l'invention peut s'appliquer à tout type de système de transmission, quel que soit le niveau (selon la terminologie des normes OSI) du protocole de communication associé au système considéré.

Un domaine d'application particulier de l'invention est celui des systèmes d'échanges de données selon le protocole X25, normalisé par le CCITT. Sur le territoire français, l'invention s'applique donc par exemple aux communications effectuées sur le réseau public TRANSPAC (marque déposée).

L'invention concerne plus particulièrement l'optimisation des communications, c'est-à-dire notamment la réduction des coûts, par la réduction des volumes de données transmis et/ou des temps de communication.

On sait en effet que, en particulier lorsqu'il est nécessaire d'emprunter un réseau public de communication, les coûts sont généralement fonction, entre autres, du nombre d'unités de données du protocole (ou de sous-ensembles de ces unités) émises et du temps de communication.

Une façon connue de diminuer le volume des données transmises est de compresser les données à transmettre.

De nombreuses techniques de compression de données sont en effet connues, notamment dans le cas des liaisons point à point. Ainsi, par exemple, un algorithme de compression adaptatif, dit algorithme de "Ziv-Lempel", a été retenu dans la recommandation V42bis du CCITT, pour les modems asynchrones.

Toutefois, dans le cas des systèmes fonctionnant par échanges d'unités de données de protocole, par exemple selon la norme X25, plusieurs difficultés sont généralement rencontrées.

On connaît ainsi un système, appelé DATAMISER (marque déposée), qui compresse systématiquement, octet par octet, l'ensemble du flux de données délivré par un terminal. Lorsque ce flux de données organisé en unités de données de protocole, comprenant chacune des zones descriptives de la communication (champs d'en-tête) et des zones de données (champs de données), un tel système de compression ne respecte pas cette structuration. En d'autres termes, il ne reconnaît ni ne préserve les en-têtes. Il ne peut donc être utilisé pour une communication qui traverse un réseau à commutation par paquets.

De façon à pallier cet inconvénient, on peut penser à compresser sélectivement les zones de données. Dans ce cas, les en-têtes sont conservés intégralement, et la quantité d'informations à transmettre est réduite de façon importante. En d'autres termes, à une unité de données de protocole source est associée une unité de données de protocole compressé, dont l'en-tête est identique à celle de l'unité de données de protocole source.

Dans la pratique, cette technique s'avère d'une efficacité non optimale. En effet, le nombre de paquets (ou PDU) transmis reste par définition le même. Le gain est donc minime, puisqu'on transmet des paquets partiellement vides.

On connaît également, par le document EP-A-0 429 054, une méthode pour interconnecter deux réseaux utilisant des unités de données de tailles différentes (8 et 9 bits). La technique proposée consiste à regrouper les 9^{e} bits (bit de contrôle) de 8 mots consécutifs dans un même mot de contrôle (c). On peut ainsi transmettre simplement des mots de 8 bits, sans perte d'informations.

L'invention a notamment pour objectif de pallier ces différents inconvénients de l'état de la technique.

Plus précisément, un objectif de l'invention est de fournir un procédé d'optimisation du rendement des communications effectuées sur un réseau d'échanges de données, réduisant le nombre d'unités de données de protocole ou de sous-ensembles d'unités transmis.

Un autre objectif de l'invention est de fournir un tel procédé, qui concerne la structure des unités de données de protocole émises. En d'autres termes, un objectif de l'invention est de fournir un tel procédé qui soit transparent tant du point de vue des terminaux que du point de vue du réseau de transmission.

Plus généralement, l'invention a pour objectif de fournir un tel procédé, qui permette de réduire au moins un des paramètres suivants :
- coût de la communication ;
- durée de la communication ;
- volume du trafic généré par le réseau, (en terme de nombre de PDU et/ou d'octets) sans perdre aucun élément de l'information transmise.

Un autre objectif de l'invention est de fournir un tel procédé, qui puisse être mis en oeuvre sur tout système de transmission de données structuré.

L'invention a également pour objectif de fournir un dispositif mettant en oeuvre un tel procédé, qui puisse être inséré entre un terminal et un réseau de communication, de façon transparente, c'est-à-dire ne nécessitant aucune adaptation, ni du terminal, ni du réseau.

Ces objectifs, ainsi que d'autres qui apparaîtront par la suite, sont atteints selon l'invention à l'aide d'un procédé de compression de donnée selon la revendication 1.

De cette façon, le rendement de la communication peut être fortement augmenté, mais la structure initiale des données est conservée. Il est en effet possible, à la réception, de reconstituer la séquence source, à l'aide des données de reconstruction ajoutées aux données transmises.

Ainsi, selon l'invention, on modifie momentanément, pendant la transmission, la structure des données, ce qui permet de réduire le nombre d'unités de données de protocole à transmettre, mais on prévoit une étape supplémentaire nouvelle, par rapport aux techniques connues, à savoir l'insertion parmi les données compressées à transmettre de données de reconstruction.

Un tel procédé comprend avantageusement les étapes de :
- réception de ladite première séquence d'unités de données de protocole source,
- compression de données, associant à chacune desdites unités de données de protocole source un sous-champ de données compressées comprenant des données correspondant à la compression des données du champ de données de ladite unité de données de protocole source,
- génération de données de reconstruction desdites unités de protocole source,
- concaténation desdits sous-en-têtes et desdits sous-champs de données compressés en une suite de données concaténées,
- découpage de ladite suite de données concaténées en éléments de données de longueur prédéterminée choisie parmi un sous-ensemble d'au moins une longueur possible,
- création de ladite seconde séquence d'unités de données de protocole à transmettre, le champ de données de chacune desdites unités de données de protocole à transmettre comprenant au moins un desdits éléments de données.

Selon cette méthode, on ajoute donc, en quelque sorte, un sous-protocole du réseau, de façon transparente (pour ce réseau). Il est à noter que les étapes de concaténation, de découpage et de création de la seconde séquence, qui sont ici distinguées dans le but de faciliter la compréhension de l'invention, peuvent en réalité être effectuées simultanément (on commence à créer un paquet dès que des données à concaténer sont reçues).

Dans la pratique, les étapes de concaténation et de découpage sont généralement conduites simultanément : on forme des paquets pleins par concaténation, et le paquet est émis aussitôt qu'il est plein. Si un sous-champ de données a été découpé (pour compléter le champ de données d'un paquet à transmettre), la partie restante de ce sous-champ forme le début du champ de données du paquet à transmettre suivant.

De façon avantageuse, ladite étape de génération de données de reconstruction comprend une étape d'association (26) à chacun desdits sous-champs (30) de données compressées d'un sous-en-tête (29) comportant au moins une information (27) représentative de la longueur dudit sous-champ (30) de données compressées.

Selon d'autres modes de réalisation avantageux de l'invention, ladite étape de génération de données de reconstruction peut comprendre :
- une étape d'association (26) à chacun desdits sous-champs (30) de données compressées d'un sous-en-tête (29) comportant au moins un pointeur désignant l'emplacement de la fin dudit sous-champ dans le champ de données de l'unité de protocole à transmettre (51ᵢ) correspondant ;
- une étape de génération d'un marqueur de contenu prédéterminé, connu dudit terminal récepteur;
- une étape d'association à chaque unité de données de protocole à transmettre (51ᵢ) d'un descripteur du contenu du champ de données de ladite unité de données de protocole.

Préférentiellement, lesdites données permettant de reconstruire ladite première séquence d'unités de données de protocole source comprennent au moins une des informations présentes dans le champ d'en-tête de chacune desdites unités de données de protocole source.

En effet, outre la longueur des données compressées, il peut être nécessaire, pour reconstituer la séquence source, de conserver des informations qualifiant les unités de données de protocole source.

Dans un mode de réalisation particulier de l'invention, ledit sous-en-tête comprend au moins un premier octet, portant au moins une des informations présentes dans le champ d'en-tête de l'unité de données de protocole source correspondant audit sous-en-tête, et au moins un second octet portant la longueur du sous-champ de données compressées associé.

De façon avantageuse, ledit algorithme de compression est un algorithme de compression adaptatif gérant à l'émission et à la réception des dictionnaires de séries de données, lesdits dictionnaires étant mis à jour identiquement à chaque transmission d'une desdites unités de données de protocole.

Cet algorithme adaptatif s'avère en effet particulièrement intéressant, en terme d'efficacité de compression.

Préférentiellement, le procédé comprend une étape de compression de données comprenant les étapes de:
- mise en oeuvre d'un algorithme de compression associant à un champ de données source un champ de données compressées ;
- comparaison de la longueur desdits champs de données source et compressées, et sélection comme sous-champ de données compressées du champ de données de longueur la plus faible.

Il est clair que, dans le cas où la compression n'est pas efficace, il est préférable de transmettre les données sous forme non compressée.

Dans ce cas, ledit sous-en-tête comporte une information représentative de ladite sélection du champ de données source ou du champ de données compressé.

Les unités de données de protocole considérées peuvent être de tout type, et par exemple des paquets de données, des trames de données ou des unités données de niveau 4 (transport).

De façon classique, celles-ci peuvent avoir une longueur d'unité de données de protocole choisie dans un ensemble d'au moins une longueur possible.

Avantageusement, le procédé comprend également une étape d'initialisation d'une transmission, consistant notamment à vérifier que le récepteur dispose de moyens de mise en oeuvre d'un procédé de décompression correspondant audit procédé de compression.

Par récepteur, on comprend soit des terminaux équipés en interne de moyens de compression/décompression, soit des dispositifs spécifiques de compression/décompression associés à des terminaux.

L'invention permet donc de ne transmettre que des unités de données pleines, puisque leurs champs de données comprennent des données concaténées appartenant à plusieurs unités source. Toutefois, le remplissage d'une unité ne doit pas être une condition obligatoire, au risque de bloquer le procédé. En effet, en particulier lorsqu'il s'agit d'une fin de séquence, il doit être possible d'émettre une unité de données non complète. Pour cela, deux temporisations sont envisageables.

Ainsi, le procédé comprend de façon avantageuse une première étape de temporisation, fixant un délai d'attente maximum D1 avant la création d'une unité de données de protocole à transmettre non pleine.

De plus, il peut aussi comprendre une seconde étape de temporisation, fixant un délai d'attente maximum D2, D2 étant inférieur à D1, avant la création d'une unité de données de protocole à transmettre comprenant au moins un élément de données de longueur prédéterminée plein, et aucun élément non plein.

L'invention concerne bien sûr également un procédé de décompression symétrique au procédé de compression décrit ci-dessus, comprenant les étapes de:
- recherche et analyse desdites données de reconstruction permettant de reconstruire ladite première séquence d'unités de données de protocole,
- reconstruction, à l'aide desdites données de reconstruction, de ladite première séquence d'unités de données de protocole, contenant des données compressés,
- décompression desdites données correspondant, sous une forme compressée, aux données contenues dans les champs de données des unités de données de protocole source,
- restitution de ladite première séquence d'unités de données de protocole source.

Elle concerne également tout dispositif mettant en oeuvre ce procédé de compression et/ou ce procédé de décompression, et notamment un dispositif comprenant d'une part des moyens de connexion à au moins un terminal émetteur/récepteur, se comportant de façon similaire au système de transmission de données, et d'autre part des moyens de connexion audit système de transmission de données, se comportant de façon similaire à un terminal émetteur/récepteur.

De cette façon, le dispositif est tout à fait transparent.

D'autres caractéristiques et avantages de l'invention apparaîtront à la lecture de la description suivante d'un mode de réalisation préférentiel de l'invention, donné à titre illustratif et non limitatif, et des dessins annexés dans lesquels :
- la figure 1 présente de façon schématique un système de transmission de données comprenant deux dispositifs selon l'invention ;
- la figure 2 est un schéma synoptique illustrant le procédé de compression de l'invention ;
- la figure 3 illustre le traitement subi par une séquence de paquet source, selon le procédé de la figure 2 ;
- la figure 4 est un exemple de sous-en-tête pouvant être utilisé dans les paquets compressés de la figure 3 ;
- la figure 5 est un schéma simplifié d'un dispositif mettant en oeuvre le procédé de la figure 2.

Le mode de réalisation décrit ci-dessous s'applique notamment aux réseaux de communication offrant une interface conforme à la norme X25, et en particulier aux réseaux utilisant un principe de tarification par segments, tel que le réseau public français TRANSPAC (marque déposée). Il est clair toutefois que l'invention ne se limite pas à ce type de réseaux, mais peut au contraire s'appliquer dans tous les cas où des échanges de données se font par unités de données de protocole.

Ainsi, et bien que par la suite on considérera plus précisément le cas de paquets de données, l'invention peut être mise en oeuvre à tous les niveaux de protocole de la normalisation OSI, notamment au niveau 2 et/ou au niveau 4.

Comme on l'a déjà mentionné, l'invention a donc pour objectif d'améliorer le rendement des communications sur un réseau donné, tout en conservant la structure du train de données émis.

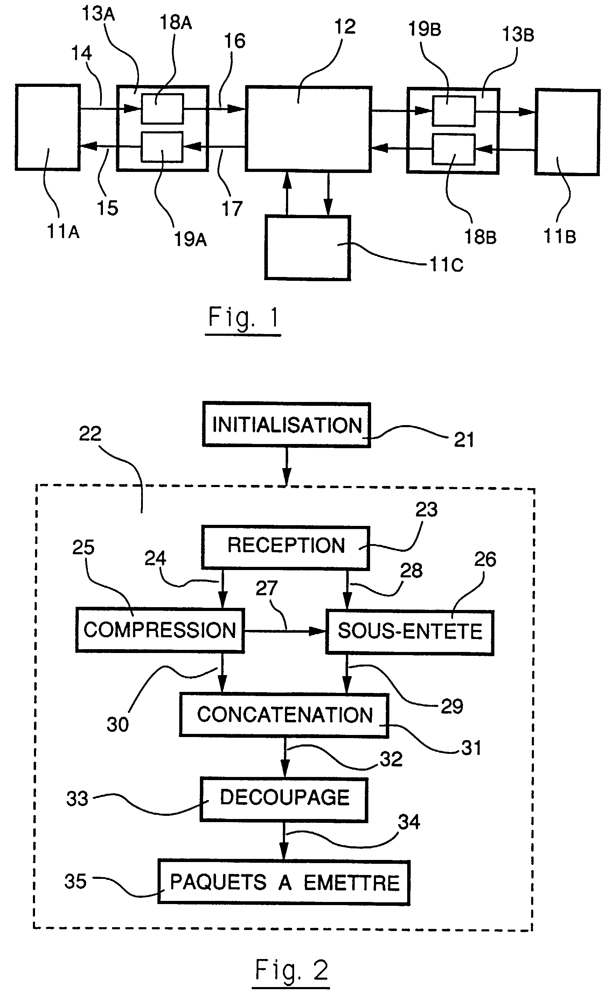

La figure 1 présente un exemple de mise en oeuvre de l'invention. Trois terminaux émetteur/récepteur 11_{A}, 11_{B} et 11_{C} sont connectés à un réseau 12 de communication par paquets.

Ces terminaux 11_{A} et 11_{C} représentent tout système d'extrémité pouvant se connecter à un réseau, tel que par exemple un ordinateur, un serveur de base de données, un terminal de saisie, etc...

Deux terminaux 11_{A} et 11_{C} peuvent être associés pour une communication particulière. Ces deux terminaux peuvent éventuellement gérer plusieurs communications simultanément. Par exemple, le terminal 11_{A} peut entretenir en même temps une première communication avec le terminal 11_{B} et une seconde communication avec le terminal 11_{C}.

Dans le mode de réalisation préférentiel de l'invention décrit en liaison avec la figure 1, les moyens de compression/décompression sont installés dans des dispositifs 13_{A} et 13_{B}, indépendants des terminaux 11_{A} et 11_{B}. Ces dispositifs de compression/décompression sont donc placés en coupure sur le câble de connexion au réseau, et sont "transparents", tant pour le terminal 11_{A} que pour le réseau 12. En d'autres termes, le dispositif 13_{A} se comporte (14, 15), vu du terminal 11_{A}, comme le réseau, et, vu du réseau 12, comme un terminal (16, 17).

Chaque dispositif 13_{A}, 13_{B} comprend des moyens de compression de données 18_{A}, 18_{B}, mettant en oeuvre le procédé qui sera décrit par la suite, et des moyens symétriques de décompression 19_{A}, 19_{B}. On décrira essentiellement par la suite le procédé de compression. Le procédé de décompression en est aisément déductible par symétrie.

Il est à noter que la compression des données d'une communication n'est pas systématique. Tout d'abord, il faut que le terminal récepteur soit associé (ou comprenne) un dispositif de décompression. Ainsi, toute communication impliquant le terminal 11_{C} se fera sans compression. Par ailleurs, il faut que les deux dispositifs de compression/décompression 13_{A} et 13_{B} disposent des moyens nécessaires (moyens de traitement et/ou mémoire). On peut par exemple prévoir des dispositifs capables de gérer plusieurs communications, dont seulement un nombre réduit avec compression/décompression.

Par ailleurs, il est tout à fait envisageable que la compression ne soit mise en oeuvre que dans un des deux sens de communication, en fonction des moyens disponibles et/ou de l'intérêt que représente la compression, en terme d'efficacité, dans chaque sens de communication.

Enfin, bien que les dispositifs 13_{A} et 13_{B} soient ici présentés sous forme d'éléments indépendants, ce qui présente l'avantage important de pouvoir les utiliser avec tous types de terminaux existants (il suffit d'interconnecter le dispositif 13_{A} entre le terminal 11_{A} et le réseau 12), il est clair que les mêmes moyens de compression/décompression peuvent être intégrés à un terminal.

La figure 2 est un schéma synoptique simplifié du procédé de compression de l'invention.

Au début de chaque communication, on peut effectuer tout d'abord (si cela est nécessaire) une phase d'initialisation 21, consistant notamment à vérifier que le dispositif récepteur dispose de moyens de compression/décompression correspondant.

Cette phase 21 comprend tout d'abord la vérification que le terminal visé dispose d'un dispositif de compression/décompression. Cela peut se faire soit de façon passive, chaque dispositif de compression gérant une liste de terminaux pouvant effectuer la décompression, soit de façon active, par une procédure d'interrogation interactive. Dans un second temps, il convient de vérifier que le dispositif récepteur a des moyens de décompression disponibles.

On aborde ensuite (si la compression est possible) une phase de compression 22 proprement dite. Cette phase 22 comprend une étape de réception 23 des paquets source à compacter. Il convient de noter que le procédé de l'invention ne fait aucune hypothèse sur la séquence de paquets reçus, ni sur la constitution de ces paquets. Ceux-ci peuvent être pleins ou non, être de taille fixe ou variable, provenir de diverses origines, etc ... Le procédé de l'invention est complètement transparent vis-à-vis de la structure d'origine.

En revanche, ainsi qu'on le verra par la suite, il assure la conservation de cette structure d'origine.

On a déjà expliqué en préambule qu'il n'était pas possible de compresser sans distinction les champs de données et les en-têtes. Selon l'invention, seul le champ de données 24 subit une compression 25. Une méthode particulière de compression avantageuse est un algorithme de compression du type dit de "Ziv-Lempel". Les principes de base de codage, décodage et mise à jour des dictionnaires sont proches de ceux décrits dans la recommandation V42bis. Bien sûr, tout autre algorithme de compression peut être utilisé. Eventuellement, plusieurs algorithmes peuvent être mis en oeuvre simultanément, le résultat le plus efficace étant seul conservé.

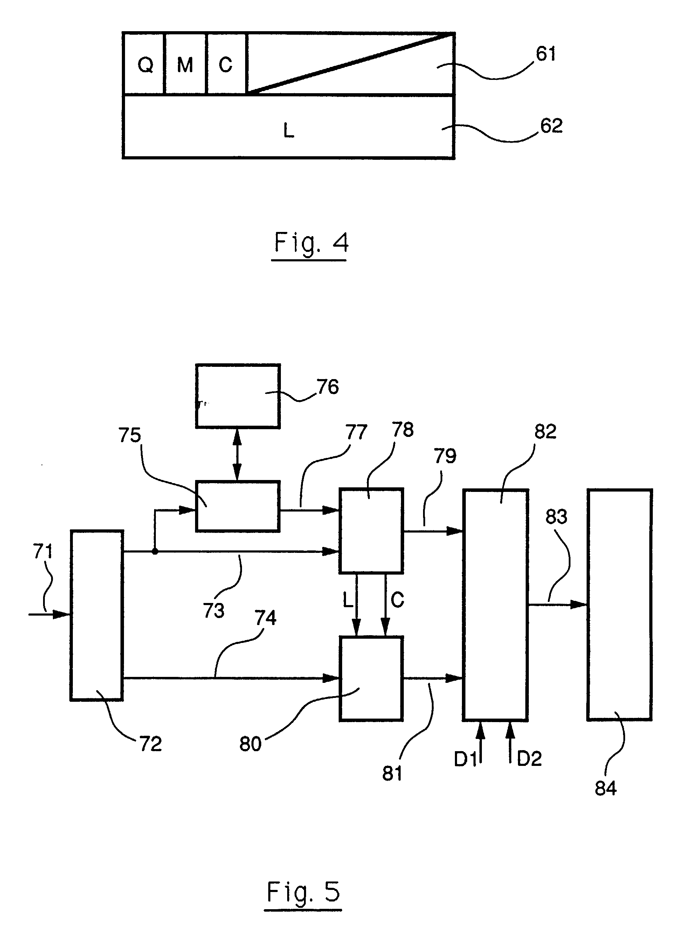

Par ailleurs, on crée (26) un sous-en-tête, ou zone d'information comprenant notamment une information 27 représentative de la longueur du champ de données compressées, délivrée par l'étape 25 de compression. Cet en-tête comporte de plus les données 28 nécessaires à la reconstruction de la séquence de paquets d'origine, c'est-à-dire en particulier les informations indiquant, dans l'en-tête de chaque paquet d'origine (non compressé) le type du paquet (information de qualification), la structuration en messages complets selon le protocole X25, etc... Un exemple particulier de sous-en-tête est décrit plus loin en liaison avec la figure 4.

Le sous-en-tête 29 et le champ de données compressées 30 correspondant à chaque paquet source sont ensuite concaténés (31) dans une suite 32 de données continue. Cette suite 32 est ensuite découpée (33) arbitrairement, c'est-à-dire sans respect des paquets d'origine, à une longueur correspondant à une longueur de champ de données autorisée par le réseau, ou à une longueur sous-multiple de cette longueur autorisée.

Chaque élément 34 ainsi découpé est utilisé pour créer (35) un nouveau paquet, dont il devient le champ de données (ou une portion de ce champ). Ce nouveau paquet a en revanche un en-tête nouveau qui lui est propre.

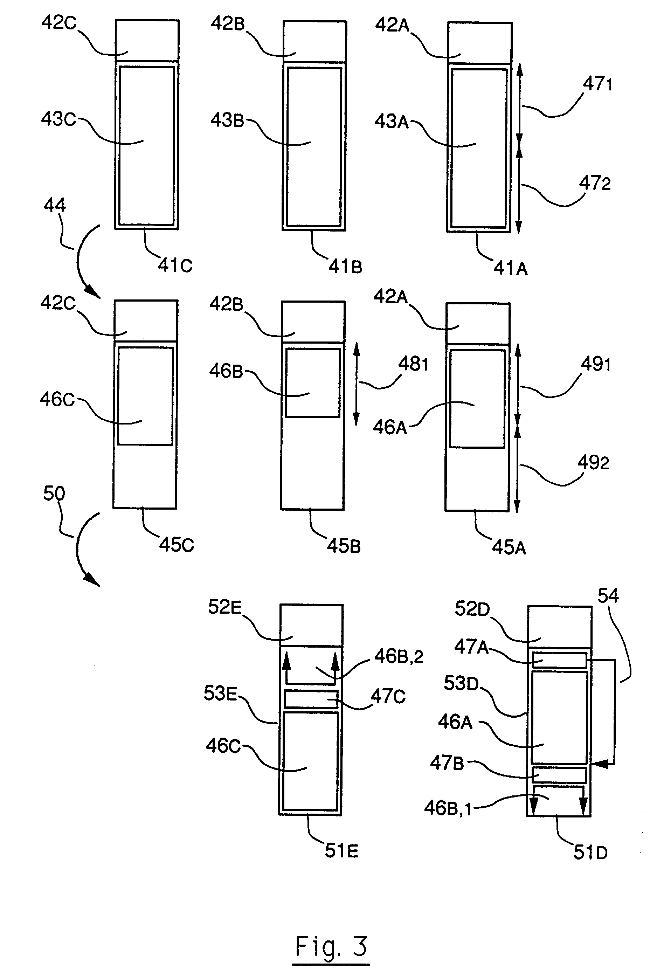

L'efficacité de ce procédé sera mieux perçue sur l'exemple de compression présenté en figure 3.

On considère une séquence source de trois paquets consécutifs 41_{A}, 41_{B} et 41_{C}. Chaque paquet est constitué de façon classique d'un en-tête 42_{A}, 42_{B} et 42_{C} (dans l'exemple considéré, conforme à la norme X25) et d'un champ de données 43_{A}, 43_{B} et 43_{C}.

On considère ici le cas de paquets pleins (mais ce n'est nullement une condition obligatoire), et d'un format conforme avec celui admis par le réseau de communication.

Chaque paquet 41ᵢ est donc ensuite compressé (44). On obtient ainsi une séquence de paquets compressés 45_{A}, 45_{B}, 45_{C}. Bien sûr, le nombre de paquets est conservé, et les en-têtes 42_{A} à 42_{C} de chacun d'entre-eux restent inchangés. en revanche, la longueur des champs de données 46_{A}, 46_{B} et 46_{C} est sensiblement réduite.

Cette compression s'avère intéressante, en particulier lorsque le réseau utilise un système de tarification par segments.

C'est notamment le cas du réseau TRANSPAC, qui utilise pour sa tarification des segments de 64 octets. Cette découpe en segments, qui est différente de la structure en paquets, a pour objectif de base d'inciter les utilisateurs à émettre des paquets de données pleins. En effet, chaque segment entamé (c'est-à-dire contenant au moins un octet) est comptabilisé, et a donc un prix de revient identique à un segment plein (64 octets).

Ainsi, le paquet 41_{A}, s'il était émis, serait comptabilisé pour deux segments 47₁ et 47₂. Au contraire, le paquet 45_{B} ne comprend qu'un segment comptabilisé 48₁. Dans ce cas de figure, la compression permet une réduction de 50 % du coût de la transmission du paquet.

Toutefois une telle compression n'offre, au mieux, qu'un taux de compression de 2 (réduction de 50% du volume de données transmis), alors que les techniques de compression permettent souvent d'obtenir des taux de compression égaux à 3, 4 voir plus. En effet, quelle que soit la qualité de la compression réalisée, il aura toujours au moins un segment de facturé par paquet.

L'invention propose une solution nouvelle, et très efficace, à ce problème. En effet, après avoir procédé à la compression 44, une étape de traitement complémentaire de compactage 50 est effectuée.

Selon l'invention, une nouvelle séquence de paquets 51_{D}, 51_{E} est créée. Ces paquets sont tout à fait indépendants des paquets de la séquence 41_{A} à 41_{C}. Notamment, leurs en-têtes 52_{D}, 52_{E} ne correspondent à aucun des en-têtes 42_{A} à 42_{C}.

En revanche, l'ensemble des données utiles à la reconstruction du train de paquets source est disponible dans les champs de données 53_{D} et 53_{E} des nouveaux paquets 51_{D} et 51_{E}.

Plus précisément, et il s'agit de la caractéristique principale de l'invention, un champ de données 53_{D} ne comprend pas uniquement les données concaténées des champs de données 46_{A} et 46_{B}, mais également, sous la forme d'un sous-en-tête 47_{A}, des données de reconstruction de la séquence d'origine.

Ce sous-en-tête 47_{A} est transparent, du point de vue du réseau. En revanche, à la décompression, il permet d'une part d'extraire du champ de données 53_{D} la suite de données 46_{A} correspondant au paquet 45_{A}, par l'information de longueur 54. Par ailleurs, il contient les informations nécessaires à la reconstruction, au moins partielle, de l'en-tête 42_{A}.

Les champs de données 53_{D} et 53_{E} sont considérés en continu. Ainsi, les données de compression 46_{B} peuvent être sans problème réparties en deux sous-ensembles 46_{B,1} et 46_{B,2} dans deux paquets distincts. Le sous-entête 47_{B} indique la fin du sous-ensemble 46_{B,2}. Un sous-en-tête peut également être réparti sur deux paquets.

La figure 4 donne un exemple de sous-en-tête pouvant avantageusement être utilisé dans le cadre du protocole X25.

Ce sous-en-tête est constitué de deux octets 61 et 62. Le premier octet contient d'une part deux éléments binaires Q et M, qui sont la reproduction directe des éléments binaires Q("Q-bit") et M ("M-bit") existant dans l'en-tête d'un paquet selon le protocole X25. Ces bits sont nécessaires pour, respectivement, qualifier le paquet et indiquer le début ou la fin d'un message.

D'autre part, il comprend un élément binaire C, qui indique si la compression a été mise en oeuvre pour le paquet considéré.

Cinq bits (63) sont disponibles pour des développements futurs. Par exemple, ils peuvent porter une information indiquant le mode de compression retenu, dans le cas où plusieurs modes peuvent être utilisés.

Le second octet comprend, sur 8 bits, la longueur L (54, fig.3) de la suite de données compressée. Cette longueur peut, si nécessaire, être codée sur deux octets, ou plus.

La figure 5 présente un schéma synoptique d'un dispositif selon l'invention, tel que représenté (13_{A}, 13_{B}) en figure 1, et mettant en oeuvre le procédé décrit ci-dessus.

Les paquets source 71 sont reçus dans un module 72 de réception et de séparation, qui délivre d'une part le champ de données 73 et d'autre part l'en-tête 74 de chaque paquet.

Le champ de données 73 est alors compressé par le module de compression 75, qui met en oeuvre par exemple un algorithme adaptatif de "Ziv-Lempel". Dans ce cas, un dictionnaire est mis à jour en permanence dans une mémoire 76.

Le champ de données compressé 77 est ensuite transmis à un module 78 de comparaison, qui sélectionne le champ de données le plus court, 79, (comparaison entre le champ compressé 77 et le champ non compressé 73, et sélection du plus court, et, dans le cas de longueurs égales, du champ nom compressé, qui nécessitera moins de traitement à la réception).

Dans le cas où plusieurs moyens de compression sont mis en oeuvre en parallèle, le module 78 effectue de même la sélection du plus efficace (c'est-à-dire du mode de compression offrant le meilleur taux de compression). Le cas échéant, la sélection peut être faite pour chaque paquet.

Un module 80 de construction des sous-en-têtes 81 prépare chaque sous-en-tête (par exemple selon le format de la figure 4), en tenant compte de l'en-tête 74 (pour extraire les bits Q et M), et des informations de longueur L et d'activation de la compression C délivrées par le module 78.

Ces sous-en-têtes 81 et champs de données compressées 79 sont ensuite concaténés et découpés à la taille des segments (ou paquets) (82), de façon à créer des segments pleins (et plus généralement, des paquets pleins).

Dans la pratique, cette opération de concaténation et de découpage est réalisée en continu. On compresse les données et on les concatène. Dès que la concaténation atteint la longueur d'un paquet, on délivre ce paquet plein 83 à un module 84 de transmission, qui se charge de le transmettre au terminal destinataire.

Ainsi, on ne transmet que des paquets pleins. Ce principe peut cependant introduire un certain délai dans la transmission d'un paquet source (attente que le paquet à transmettre soit plein). Un mécanisme de gestion des délais est donc avantageusement être mis en place.

Un tel mécanisme est également nécessaire lorsqu'on se trouve en fin de séquence source (fin de message). En effet, il est peu probable que le dernier paquet soit plein, mais il doit bien sûr être malgré tout transmis. On tient donc compte de deux temporisations D1 et D2, de la façon suivante :
- D1 : temporisation segment plein : on émet un paquet non plein, mais ne comprenant que des segments pleins (cette temporisation est notamment intéressante dans le cas du réseau TRANSPAC, où la facturation se fait par segments) ;
- D2 : temporisation maximum : émission d'un paquet, contenant un dernier segment non plein (cette temporisation est nécessaire, pour éviter le blocage du dispositif, notamment en fin de séquence source).

De préférence, on choisira D2 très inférieur à D1, de façon à minimiser le nombre de segments émis.

L'efficacité du procédé et du dispositif de l'invention apparaît clairement sur la figure 3, puisque l'on constate que deux paquets (51_{E}, 51_{D}) sont transmis, alors que la séquence source comprenait trois paquets pleins (41_{A}, 41_{B}, 41_{C}).

Cette efficacité est encore plus probante, bien sûr, lorsque les paquets source ne sont pas pleins. Dans ce cas, le principe de la concaténation permet un gain important en nombre de paquets (ou en segments, c'est-à-dire en portions de paquets) transmis.

Dans le mode de réalisation décrit ci-dessus, le procédé de l'invention est implanté dans des unités de compression dédiées, insérées entre un terminal et le réseau. Il peut par exemple s'agir d'un appareil de la gamme COMPLYS (marque déposée), commercialisée par la société OST (marque déposée).

Ce procédé peut également être directement intégré à un terminal, tel que, par exemple, un terminal intégrant une carte de communication X25 PCSNET (marque déposée), également commercialisée par OST.

Il peut encore être intégré à un élément du réseau de communication, et par exemple à un ECOM 25 (marque déposée) d'OST.

Par ailleurs, ainsi qu'on l'a déjà mentionné, le procédé de l'invention n'est pas limité aux réseaux X25. Il peut en effet être mis en oeuvre au-dessus de toute couche de protocole offrant un service en mode connecté (c'est-à-dire présentant une connexion logique fiable, sans perte, ni duplication, ni déséquencement). Par exemple, il peut être mis en oeuvre dans des terminaux de réseaux locaux tels que ceux utilisant la norme TCP/IP (la compression étant alors mise en oeuvre au niveau 4 (TCP) ou au-dessus). Il peut notamment s'agir d'un terminal équipé d'une carte MAGELLAN (marque déposée).

Le mode de réalisation qui a été présenté propose d'introduire des sous-entêtes indiquant la longueur du sous-champ de données suivant. Il est clair toutefois que l'invention peut être mise en oeuvre de plusieurs autres façons, dès lors que les paquets (ou PDU) transmis portent une information permettant de reconstruire les paquets (ou PDU) source.

Par exemple, il n'est pas obligatoire qu'un sous-en-tête soit inséré entre chaque sous-champ de données. Il suffit qu'ils apparaissent régulièrement (par exemple tous les 5 sous-champs), chaque sous-en-tête portant alors des informations permettant d'extraire plusieurs (par exemple 5) sous-champs de données consécutifs.

Par ailleurs, l'information de longueur du (ou des) sous-champ de données peut être remplacé par un pointeur, indiquant la position absolue (et non plus relative) de la fin du sous-champ dans le paquet transmis.

Selon un autre mode de mise en oeuvre, on peut également insérer entre chaque sous-champ de données un élément de données de format prédéterminé (ou marqueur), que le terminal récepteur connaît. Lorsqu'il détecte ce marqueur, le terminal sait qu'un nouveau paquet source commence.

On peut encore prévoir, au début de chaque champ de données des paquets à transmettre, une zone décrivant le contenu du paquet (par exemple décrivant les emplacements des changements de paquets source). Une telle zone, ou descripteur, correspond en d'autres termes à une extension de l'en-tête des paquets à transmettre.

## Revendications

1. Procédé de compression de données, du type appliqué à un système de transmission de données par échange d'unités de données de protocole (41ᵢ) entre au moins un terminal émetteur (11_{A}) et au moins un terminal récepteur (11_{B}), chacune desdites unités de données de protocole (41ᵢ) comprenant un champ d'en-tête (42ᵢ) et un champ de données (43ᵢ),
procédé caractérisé en ce qu'il associe à une première séquence de N unités de données de protocole source (41_{A}, 41_{B}, 41_{C}) une seconde séquence de M unités de données de protocole à transmettre (51_{D}, 51_{E}), M étant inférieur ou égal à N, et en ce qu'il comprend les étapes suivantes :
- insertion de données (46ᵢ) correspondant à la compression, selon au moins un algorithme de compression, de données contenues dans les champs de données (43ᵢ) d'au moins deux desdites unités de données de protocole source (41ᵢ), dans au moins certains des champs de données (53ᵢ) desdites unités de données de protocole à transmettre (51ᵢ) ;
- insertion de données de reconstruction (47ᵢ) permettant de reconstruire ladite première séquence d'unités de données de protocole source (41ᵢ), à partir de ladite seconde séquence d'unités de données de protocole à transmettre (51ᵢ), dans au moins certaines desdites unités de protocole à transmettre (51ᵢ) ;
- concaténation (31) des données compressées (46ᵢ) et des données de reconstruction (47ᵢ) pour former une suite de données concaténées ;
- découpage (33) de ladite suite de données concaténées en éléments (34) de données, le champ de données de chaque unité de protocole à transmettre (51ᵢ) contenant au moins un élément (34) de données.

2. Procédé selon la revendication 1, caractérisé en ce qu'il comprend les étapes de :
- réception (23) de ladite première séquence d'unités de données de protocole source,
- compression de données (25), associant auxdites unités de données de protocole source un sous-champ (30) de données compressées comprenant des données correspondant à la compression des données du champ de données (24) de ladite unité de données de protocole source,
- génération (26) de données de reconstruction (29) desdites unités de protocole source,
- concaténation (31) desdites données de reconstruction et desdits sous-champs (30) de données compressés en une suite (32) de données concaténées,
- découpage (33) de ladite suite (32) de données concaténées en éléments (34) de données de longueur prédéterminée choisie parmi un sous-ensemble d'au moins une longueur possible,
- création (35) de ladite seconde séquence d'unités de données de protocole à transmettre, le champ de données de chacune desdites unités de données de protocole à transmettre comprenant au moins un desdits éléments (34) de données.

3. Procédé selon la revendication 2, caractérisé en ce que ladite étape de génération de données de reconstruction comprend une étape d'association (26) à chacun desdits sous-champs (30) de données compressées d'un sous-en-tête (29) comportant au moins une information (27) représentative de la longueur dudit sous-champ (30) de données compressées.

4. Procédé selon l'une quelconque des revendications 1 à 3, caractérisé en ce que lesdites données de reconstruction (47ᵢ ; 29) comprennent au moins une des informations présentes dans le champ d'en-tête (42ᵢ ; 28) de chacune desdites unités de données de protocole (41ᵢ) source.

5. Procédé selon les revendications 3 et 4, caractérisé en ce que ledit sous-en-tête (47ᵢ ; 29) comprend au moins un premier octet (61), portant au moins une des informations (Q, M) présentes dans le champ d'en-tête (42ᵢ) de l'unité de données de protocole source (41ᵢ) correspondant audit sous-en-tête, et au moins un second octet (62) portant la longueur (L) du sous-champ (46ᵢ ; 30) de données compressées associé.

6. Procédé selon l'une quelconque des revendications 2 à 5, caractérisé en ce que ladite étape de génération de données de reconstruction comprend une étape d'association (26) à chacun desdits sous-champs (30) de données compressées d'un sous-en-tête (29) comportant au moins un pointeur désignant l'emplacement de la fin dudit sous-champ dans le champ de données de l'unité de protocole à transmettre (51ᵢ) correspondant.

7. Procédé selon l'une quelconque des revendications 2 à 6, caractérisé en ce que ladite étape de génération (26) de données de reconstruction comprend une étape de génération d'un marqueur de contenu prédéterminé, connu dudit terminal récepteur.

8. Procédé selon l'une quelconque des revendications 2 à 7, caractérisé en ce que ladite étape de génération (26) de données de reconstruction comprend une étape d'association à chaque unité de données de protocole à transmettre (51ᵢ) d'un descripteur du contenu du champ de données de ladite unité de données de protocole.

9. Procédé selon l'une quelconque des revendications 1 à 8, caractérisé en ce que ledit algorithme de compression (25) est un algorithme de compression adaptatif gérant à l'émission et à la réception des dictionnaires (76) de séries de données, lesdits dictionnaires (76) étant mis à jour identiquement à chaque transmission d'une desdites unités de données de protocole.

10. Procédé selon l'une quelconque des revendications 1 à 9, caractérisé en ce qu'il comprend une étape (25) de compression de données comprenant les étapes de:
- mise en oeuvre (75) d'un algorithme de compression associant à un champ de données source (73) un champ de données compressées (77) ;
- comparaison (78) de la longueur desdits champs de données source (73) et compressées, et sélection (79) comme sous-champ de données compressées (79) du champ de données (73, 77) de longueur la plus faible.

11. Procédé selon la revendications 10 et l'une quelconque des revendications 2 à 9, caractérisé en ce que ledit sous-en-tête (47ᵢ ; 29 ; 81) comporte une information (C) représentative de ladite sélection (79) du champ de données source (73) ou du champ de données compressées (77).

12. Procédé selon l'une quelconque des revendications 1 à 11, caractérisé en ce que lesdites unités de données de protocole appartiennent au groupe comprenant :
- les paquets de données (41ᵢ ; 51ᵢ);
- les trames de données ;
- les unités de données de protocole de niveau transport.

13. Procédé selon l'une quelconque des revendications 2 à 12, caractérisé en ce que lesdites unités de données de protocole (41ᵢ ; 51ᵢ) ont une longueur d'unité de données de protocole choisie dans un ensemble d'au moins une longueur possible, et en ce que la longueur desdits éléments de données est un sous-multiple de ladite longueur d'unités de données de protocole choisie.

14. Procédé selon l'une quelconque des revendications 1 à 13, caractérisé en ce qu'il comprend une étape (28) d'initialisation d'une transmission, consistant notamment à vérifier que le récepteur (11_{B}) dispose de moyens (19_{B}) de mise en oeuvre d'un procédé de décompression correspondant audit procédé de compression.

15. Procédé selon l'une quelconque des revendications 1 à 4, caractérisé en ce qu'il comprend une première étape de temporisation, fixant un délai d'attente maximum D1 avant la création d'une unité de données de protocole à transmettre non pleine.

16. Procédé selon les revendications 13 et 15, caractérisé en ce qu'il comprend une seconde étape de temporisation, fixant un délai d'attente maximum D2, D2 étant inférieur à D1, avant la création d'une unité de données de protocole à transmettre comprenant au moins un élément de données de longueur prédéterminée plein et aucun élément non plein.

17. Procédé de décompression d'unités de données de protocole compressées selon le procédé de l'une quelconque des revendications 1 à 16, caractérisé en ce qu'il comprend les étapes de :
- recherche et analyse desdites données de reconstruction (47ᵢ) permettant de reconstruire ladite première séquence d'unités de données de protocole (41ᵢ),
- reconstruction, à l'aide desdites données de reconstruction (47i), séquence d'unités de données de protocole, contenant des données compressives (46i),
- décompression desdites données (46ᵢ) correspondant, sous une forme compressée, aux données contenues dans les champs de données (43ᵢ) des unités de données de protocole source (41ᵢ),
- restitution de ladite première séquence d'unités de données (41ᵢ) de protocole source.

18. Dispositif de compression de données, du type utilisé dans un système de transmission de données par échange d'unités de données de protocole (41ᵢ) entre au moins un terminal émetteur (11_{A}) et au moins un terminal récepteur (11_{B}), chacune desdites unités de données de protocole (41ᵢ) comprenant un champ d'en-tête (42ᵢ) et un champ de données (43ᵢ),
caractérisé en ce qu'il comprend des moyens (18ᵢ) de compression, dans au moins un sens de transmission de données et, pour au moins une communication, associant à une première séquence de N unités de données de protocole source (41_{A}, 41_{B}, 41_{C}) une seconde séquence de M unités de données de protocole à transmettre (51_{D}, 51_{E}), M étant inférieur ou égal à N, lesdits moyens (18ᵢ) de compression comprenant :
- des moyens (75) de compression de données, selon au moins un algorithme de compression, assurant la compression de données contenues dans les champs de données (43ᵢ) d'au moins deux desdites unités de données de protocole source (41ᵢ) ;
- des moyens (80) de génération de données de reconstruction (47ᵢ) permettant de reconstruire ladite première séquence d'unités de données de protocole source (41ᵢ), à partir de ladite seconde séquence d'unités de données de protocole à transmettre (51ᵢ) ;
- des moyens (82) de concaténation des données compressées (46ᵢ) et des données de reconstruction (47ᵢ), pour former une suite de données concaténées, et de découpage de ladite suite de données concaténées en éléments (34) de données ; et
- des moyens (84) de transmission d' unités de protocole à transmettre, chaque unité de protocole à transmettre (51ᵢ) contenant au moins un desdits éléments (34) de données.

19. Dispositif selon la revendication 18, caractérisé en ce qu'il comprend des moyens (19ᵢ) de décompression de données compressées par lesdits moyens (18ᵢ) de compression, lesdits moyens de décompression comprenant :
- des moyens de séparation desdites données de reconstruction (47ᵢ) et desdits éléments (34) de données contenus dans lesdites unités de protocole à transmettre (51ᵢ) ;
- des moyens de décompression symétriques auxdits moyens (75) de compression de données, délivrant des données source décompressées ; et
- des moyens de reconstruction desdites unités de protocole source, à partir desdites données source décompressées et en fonction desdites données de reconstruction (47ᵢ).

20. Dispositif selon l'une quelconque des revendications 18 et 19, caractérisé en ce qu'il comprend d'une part des moyens de connexion à au moins un terminal émetteur/récepteur, se comportant de façon similaire au système de transmission de données, et d'autre part des moyens de connexion audit système de transmission de données, se comportant de façon similaire à un terminal émetteur/récepteur.

21. Dispositif selon l'une quelconque des revendications 18 et 19, caractérisé en ce qu'il est intégré à l'un desdits terminaux ou à un élément d'un réseau de communication interconnectant lesdits terminaux.

## Patentansprüche

1. Verfahren zur Datenkompression von der Art, die auf ein Datenübertragungssystem durch Austausch von Protokolldateneinheiten (41ᵢ) zwischen mindestens einem Sendeterminal (11_{A}) und mindestens einem Empfangsterminal (11_{B}) angewandt werden, wobei jede dieser Protokolldateneinheiten (41ᵢ) ein Kopffeld (42ᵢ) und ein Datenfeld (43ᵢ) umfaßt,
dadurch gekennzeichnet, daß es einer ersten Folge von N Quellenprotokolldaten (41_{A}, 41_{B}, 41_{C}) eine zweite Folge zu sendender Protokolldateneinheiten (51_{D}, 51_{E}) zuordnet, wobei M kleiner oder gleich N ist, und dadurch, daß es die folgenden Schritte umfaßt:
- Einfügen von Daten (46ᵢ), welche der Kompression gemäß mindestens einem Kompressionsalgorithmus von Daten entsprechen, die in den Datenfeldern (43ᵢ) von mindestens zwei der Quellenprotokolldaten (41ᵢ) enthalten sind, in mindestens einige der Datenfelder (53ᵢ) der zu sendenden Protokolldateneinheiten (51ᵢ);
- Einfügen von Wiederherstellungsdaten (47ᵢ), mit denen die erste Folge von Quellenprotokolldateneinheiten (41ᵢ) wiederhergestellt werden können, ausgehend von der zweiten zu sendenden Folge von Protokolldateneinheiten (51ᵢ) in mindestens einige dieser zu sendenden Protokolleinheiten (51ᵢ);
- Verkettung (31) der komprimierten Daten (46ᵢ) und der Wiederherstellungsdaten (47ᵢ), um eine Folge verketteter Daten zu bilden;
- Zerschneiden (33) dieser Folge verketteter Daten in Datenelemente (34), wobei das Datenfeld einer jeden zu sendenden Protokolleinheit (51ᵢ) mindestens ein Datenelement (34) enthält.

2. Verfahren gemäß Anspruch 1, dadurch gekennzeichnet, daß es die folgenden Schritte umfaßt:
- Empfang (23) der ersten Folge von Quellenprotokolldateneinheiten,
- Kompression der Daten (25), wobei den Quellenprotokolldateneinheiten ein Unterfeld (30) von komprimierten Daten zugeordnet wird, welche Daten umfassen, die der Kompression von Daten des Datenfeldes (24) aus der Quellenprotokolldateneinheit entsprechen,
- Erzeugung (26) von Wiederherstellungsdaten (29) dieser Quellenprotokolldateneinheiten,
- Verkettung (31) der Wiederherstellungsdaten und der komprimierten Datenunterfelder (30) zu einer Folge (32) verketteter Daten,
- Zerschneiden (33) der Folge (32) verketteter Daten in Datenelemente (34) vorgegebener Länge, die aus einer Untermenge von mindestens einer möglichen Länge ausgewählt werden,
- Erzeugen (35) der zweiten Folge zu sendender Quellenprotokolldateneinheiten, wobei das Datenfeld einer jeden dieser zu sendenden Protokolldateneinheiten mindestens eines dieser Datenelemente (34) umfaßt.

3. Verfahren gemäß Anspruch 2, dadurch gekennzeichnet, daß der Schritt zur Erzeugung von Wiederherstellungsdaten einen Schritt (26) für die Zuordnung zu jeden der Unterfelder (30) komprimierter Daten eines Unterkopfes (29) umfaßt, der mindestens eine Information (27) enthält, welche repräsentativ für die Länge des Unterfeldes (30) komprimierter Daten ist.

4. Verfahren gemäß einem der Ansprüche 1 bis 3, dadurch gekennzeichnet, daß die Wiederherstellungsdaten (47ᵢ; 29) mindestens eine der im Kopffeld (42ᵢ; 28) einer jeden Quellenprotokolldateneinheit (41ᵢ) vorhandenen Informationen enthält.

5. Verfahren gemäß der Ansprüche 3 und 4, dadurch gekennzeichnet, daß der Unterkopf (47ᵢ, 29) mindestens ein erstes Byte (61) umfaßt, welches mindestens eine der im Kopffeld (42ᵢ) der Quellenprotokolldateneinheit (41ᵢ) vorhandenen Informationen (Q, M) trägt, die dem Unterkopf entsprechen, sowie mindestens ein zweites Byte (62), welches die Länge (L) des zugeordneten Unterfeldes (46ᵢ; 30) komprimierter Daten trägt.

6. Verfahren gemäß einem der Ansprüche 2 bis 5, dadurch gekennzeichnet, daß der Schritt zur Erzeugung der Wiederherstellungsdaten einen Schritt (26) der Zuordnung zu jedem der Unterfelder (30) komprimierter Daten eines Unterkopfes (29) umfaßt, der mindestens einen Zeiger enthält, der die Position des Endes des Unterfeldes im Datenfeld der entsprechenden zu sendenden Protokolleinheit (51ᵢ) anzeigt.

7. Verfahren gemäß einem der Ansprüche 2 bis 6, dadurch gekennzeichnet, daß der Schritt (26) zur Erzeugung der Wiederherstellungsdaten einen Schritt zur Erzeugung einer Kennzeichnung mit vom Empfangsterminal bekanntem vorgegebenen Inhalt enthält.

8. Verfahren gemäß einem der Ansprüche 2 bis 7, dadurch gekennzeichnet, daß der Schritt (26) zur Erzeugung der Wiederherstellungsdaten einen Schritt zur Zuordnung einer Beschreibungsmarke für den Inhalt des Datenfeldes der jeweiligen Protokolldateneinheit zu jeder dieser zu sendenden Protokolldateneinheiten (51ᵢ) enthält.

9. Verfahren gemäß einem der Ansprüche 1 bis 8, dadurch gekennzeichnet, daß es sich beim Kompressionsalgorithmus (25) um einen adaptierenden Kompressionsalgorithmus handelt, der das Senden und den Empfang der Symbolverzeichnisse (76) von Datenreihen verwaltet, wobei diese Symbolverzeichnisse (76) bei jedem Senden einer der Protokolldateneinheiten in identischer Weise aktualisiert werden.

10. Verfahren gemäß einem der Ansprüche 1 bis 9, dadurch gekennzeichnet, daß es einen Schritt (25) zur Datenkompression mit den folgenden Schritten umfaßt:
- Anwendung eines Kompressionsalgorithmus (75), der einem Quellendatenfeld (73) ein Feld komprimierter Daten (77) zuordnet;
- Vergleich (78) der Länge dieser Felder komprimierter Quellendaten (73) und Auswahl (79) als Unterfeld komprimierter Daten (79) des Datenfeldes (73, 77) mit der geringsten Länge.

11. Verfahren gemäß Anspruch 10 sowie gemäß einem der Ansprüche 2 bis 9, dadurch gekennzeichnet, daß der Unterkopf (47ᵢ; 29; 81) eine Information (C) enthält, die für die Auswahl (79) des Feldes von Quellendaten (73) oder für das Feld der komprimierten Daten (77) repräsentativ ist.

12. Verfahren gemäß einem der Ansprüche 1 bis 11, dadurch gekennzeichnet, daß die Protokolldateneinheiten der Gruppe angehören, die folgendes umfaßt:
- die Datenpakete (41ᵢ; 51ᵢ);
- die Datenrahmen;
- die Protokolldateneinheiten auf der Transportebene.

13. Verfahren gemäß einem der Ansprüche 2 bis 12, dadurch gekennzeichnet, daß die Länge der Protokolldateneinheiten (41ᵢ, 51ᵢ) innerhalb einer Menge gewählt wurde, die aus mindestens einer möglichen Länge besteht sowie dadurch, daß die Länge dieser Datenelemente ein ganzes Bruchteil der gewählten Dateneinheitenlänge beträgt.

14. Verfahren gemäß einem der Ansprüche 1 bis 13, dadurch gekennzeichnet, daß es einen Initialisierungsschritt (28) einer Sendung umfaßt, welcher insbesondere darin besteht nachzuweisen, daß der Empfänger (11_{B}) über Mittel (19_{B}) zur Anwendung eines dem Kompressionsverfahren entsprechenden Dekompressionsverfahrens verfügt.

15. Verfahren gemäß einem der Ansprüche 1 bis 4, dadurch gekennzeichnet, daß es einen ersten Verzögerungsschritt enthält, der eine höchste Wartezeit D1 vor der Erzeugung einer vollen zu sendenden Protokolldateneinheit festlegt.

16. Verfahren gemäß der Ansprüche 13 und 15, dadurch gekennzeichnet, daß es einen zweiten Verzögerungsschritt umfaßt, der eine maximale Wartezeit D2 vor der Erzeugung einer zu sendenden Protokolldateneinheit festlegt, die mindestens ein volles Datenelement vorgegebener Länge und kein nicht volles Datenelement umfaßt, wobei D2 kürzer als D1 ist.

17. Verfahren zum Dekomprimieren von komprimierten Protokolldateneinheiten nach dem Verfahren gemäß einem der Ansprüche 1 bis 16, dadurch gekennzeichnet, daß es die folgenden Schritte umfaßt:
- Suchen und Analysieren der Wiederherstellungsdaten (47ᵢ), welche das Wiederherstellen der ersten Folge von Protokolldateneinheiten (41ᵢ) ermöglichen;
- Wiederherstellung der Folgen von Protokolldateneinheiten, welche kompressive Daten (46ᵢ) enthalten, mit Hilfe der Wiederherstellungsdaten (47ᵢ),
- Dekomprimieren der Daten (46ᵢ), welche in komprimierter Form denen im Datenfeld (43ᵢ) von Quellenprotokolldateneinheiten (41ᵢ) enthaltenen Daten entsprechen,
- Wiederherstellung der ersten Folge von Quellenprotokolldateneinheiten (41ᵢ).

18. Verfahren zur Datenkompression von der Art, die in einem Datenübertragungssystem durch Austausch von Protokolldateneinheiten (41ᵢ) zwischen mindestens einem Sendeterminal (11_{A}) und mindestens einem Empfangsterminal (11_{B}) angewandt werden, wobei jede dieser Protokolldateneinheiten (41ᵢ) ein Kopffeld (42ᵢ) und ein Datenfeld (43ᵢ) umfaßt,
dadurch gekennzeichnet, daß es über Kompressionsmittel (18ᵢ) in mindestens eine Richtung der Datenübertragung und für mindestens eine Kommunikation verfügt, wobei einer ersten Folge von N Quellenprotokolldateneinheiten (41_{A}, 41_{B}, 41_{C}) eine zweite Folge von M zu sendenden Quellenprotokolldateneinheiten (51_{D}, 51_{E}) zugeordnet werden, wobei M kleiner oder gleich N ist und wobei die Kompressionsmittel (18ᵢ) folgendes umfassen:
- Mittel (75) zur Datenkompression gemäß mindestens einem Kompressionsalgorithmus, der die Kompression der Daten sicherstellt, die im Datenfeld (43ᵢ) von mindestens zwei der Quellenprotokolldateneinheiten (41ᵢ) enthalten sind;
- Mittel (80) zum Erzeugen von Wiederherstellungsdaten (47ᵢ), welche die Wiederherstellung der ersten Quellenprotokolldateneinheit (41ᵢ) ermöglicht, ausgehend von der zweiten Folge von zu sendenden Protokolldateneinheiten (51ᵢ);
- Mittel (82) zum Verketten von komprimierten Daten (46ᵢ) und von Wiederherstellungsdaten (47ᵢ), um eine Folge von verketteten Daten zu bilden sowie zum Zerschneiden dieser Folge verketteter Daten in Datenelemente (34); und
- Mittel (84) zum Übertragen von zu sendenden Protokolleinheiten, wobei jede zu sendende Protokolldateneinheit (51ᵢ) mindestens eines dieser Datenelemente (34) enthält.

19. Vorrichtung gemäß Anspruch 18, dadurch gekennzeichnet, daß sie über Mittel (19ᵢ) zum Dekomprimieren der mit den Mitteln (18ᵢ) komprimierten Daten verfügt, wobei diese Mittel zum Dekomprimieren folgendes umfassen:
- Mittel zum Trennen der Wiederherstellungsmittel (47ᵢ) und der in den zu sendenden Protokolldateneinheiten (51ᵢ) enthaltenen Elemente (34);
- Dekompressionsmittel, die zu den Datenkompressionsmitteln (75) symmetrisch sind, welche dekomprimierte Quellendaten liefern; und
- Mittel zum Wiederherstellen der Quellenprotokolldateneinheiten, ausgehend von den dekomprimierten Quellendaten und als Funktion der Wiederherstellungsdaten (47ᵢ).

20. Vorrichtung gemäß einem der Ansprüche 18 oder 19, dadurch gekennzeichnet, daß sie einerseits über Verbindungsmittel zu mindestens einem Empfangs-/Sendeterminal verfügt, welche sich in ähnlicher Weise wie das Datenübertragungssystem verhalten und andererseits über Verbindungsmittel zum Datenübertragungssystem, welche sich in ähnlicher Weise wie ein Empfangs-/Sendeterminal verhalten.

21. Vorrichtung gemäß einem der Ansprüche 18 oder 19, dadurch gekennzeichnet, daß sie in einem der oben erwähnten Terminals oder in einem Element eines Kommunikationsnetzes eingebaut ist, welche diese Terminals miteinander verbindet.

## Claims

1. Method for data compression of the type applied to a system for data transmission by exchange of protocol data units (41ᵢ) between at least one transmitting terminal (11_{A}) and at least one receiving terminal (11_{B}), each of the said protocol data units (41ᵢ) comprising a header field (42ᵢ) and a data field (43ᵢ),
which method is characterised in that it associates a second sequence of M protocol data units to be transmitted (51_{D}, 51_{E}) with a first sequence of N source protocol data units (41_{A}, 41_{B}, 41_{C}), M being less than or equal to N, and in that it comprises the following steps:
- insertion of data (46ᵢ) corresponding to the compression, in accordance with at least one compression algorithm, of data contained in the data fields (43ᵢ) of at least two of the said source protocol data units (41ᵢ), in at least some of the data fields (53ᵢ) of the said protocol data units to be transmitted (51ᵢ);
- insertion of reconstruction data (47ᵢ) allowing reconstruction of the said first sequence of source protocol data units (41ᵢ) from the said second sequence of protocol data units to be transmitted (51ᵢ), in at least some of the said protocol data units to be transmitted (51ᵢ);
- concatenation (31) of the compressed data (46ᵢ) and of the reconstruction data (47ᵢ) to form a sequence of concatenated data;
- slicing (33) the said sequence of concatenated data into data elements (34), the data field of each protocol unit to be transmitted (51ᵢ) containing at least one data element (34).

2. Method according to Claim 1, characterised in that it comprises the following steps:
- receipt (23) of the said first sequence of source protocol data units,
- data compression (25), associating a sub-field (30) of compressed data comprising data corresponding to the compression of the data of the data field (24) of the said source protocol data unit, with the said source protocol data units,
- generation (26) of reconstruction data (29) for the said source protocol units,
- concatenation (31) of the said reconstruction data and the said sub-fields (30) of compressed data into a sequence (32) of concatenated data,
- slicing (33) of the said sequence (32) of concatenated data into data elements (34) of predetermined length chosen from a subset of at least one possible length,
- creation (35) of the said second sequence of protocol data units to be transmitted, the data field of each of the said protocol data units to be transmitted comprising at least one of the said data elements (34).

3. Method according to Claim 2, characterised in that the said step for generation of reconstruction data comprises a step for the association (26), with each of the said sub-fields (30) of compressed data, of a sub-header (29) comprising at least one information element (27) representative of the length of the said sub-field (30) of compressed data.

4. Method according to any one of Claims 1 to 3, characterised in that the said reconstruction data (47ᵢ; 29) comprise at least one of the information elements present in the header field (42ᵢ; 28) of each of the said source protocol data units (41ᵢ).

5. Method according to Claims 3 and 4, characterised in that the said sub-header (47ᵢ; 29) comprises at least a first byte (61), bearing at least one of the information elements (Q, M) present in the header field (42ᵢ) of the source protocol data unit (41ᵢ) corresponding to the said sub-header, and at least a second byte (62) bearing the length (L) of the associated sub-field (46ᵢ; 30) of compressed data.

6. Method according to any one of Claims 2 to 5, characterised in that the said step for generation of reconstruction data comprises a step for the association (26), with each of the said sub-fields (30) of compressed data, of a sub-header (29) comprising at least one pointer indicating the location of the end of the said sub-field in the corresponding data field of the protocol unit to be transmitted (51ᵢ).

7. Method according to any one of Claims 2 to 6, characterised in that the said step for generation (26) of reconstruction data comprises a step for generation of a marker of predetermined content, known to said receiving terminal.

8. Method according to any one of Claims 2 to 7, characterised in that the said step for generation (26) of reconstruction data comprises a step for association, with each protocol data unit to be transmitted (51ᵢ), of a descriptor of the content of the data field of the said protocol data unit.

9. Method according to any one of Claims 1 to 8, characterised in that the said compression algorithm (25) is an adapted compression algorithm managing dictionaries (76) of data sequences on transmission and on reception, the said dictionaries (76) being updated identically on each transmission of one of the said protocol data units.

10. Method according to any one of Claims 1 to 9, characterised in that it comprises a step (25) for data compression comprising the following steps:
- application (75) of a compression algorithm associating a compressed data field (77) with a source data field (73);
- comparison (78) of the length of the said source data field (73) and compressed data field and selection (79) of the shortest data field (73, 77) as sub-field of compressed data (79).

11. Method according to Claim 10 and any one of Claims 2 to 9, characterised in that the said sub-header (47ᵢ; 29; 81) comprises an information element (C) representative of the said selection (79) of the source data field (73) or of the compressed data field (77).

12. Method according to any one of Claims 1 to 11, characterised in that the said protocol data units belong to the group comprising:
- the data packets (41ᵢ; 51ᵢ);
- the data frames;
- the transport level protocol data units.

13. Method according to any one of Claims 2 to 12, characterised in that the said protocol data units (41ᵢ; 51ᵢ) have a protocol data unit length chosen from a set of at least one possible length, and in that the length of the said data elements is a submultiple of the said chosen protocol data unit length.

14. Method according to any one of Claims 1 to 13, characterised in that it comprises a step (28) for initialisation of a transmission, consisting, in particular, of verifying that the receiver (11_{B}) possesses means (19_{B}) for implementing a decompression method corresponding to the said compression method.

15. Method according to any one of Claims 1 to 4, characterised in that it comprises a first time-delay step, fixing a maximum waiting time D1 before the creation of a non-full protocol data unit to be transmitted.

16. Method according to Claims 13 and 15, characterised in that it comprises a second time-delay step, fixing a maximum waiting time D2, D2 being shorter than D1, before the creation of a protocol data unit to be transmitted comprising at least one full data element of predetermined length and no element that is not full.

17. Method for decompression of compressed protocol data units in accordance with the method of any one of Claims 1 to 16, characterised in that it comprises the following steps:
- searching for and analysing the said reconstruction data (47ᵢ) enabling the said first sequence of protocol data units (41ᵢ) to be reconstructed,
- reconstruction, with the aid of the said reconstruction data (47ᵢ), [lacuna] sequence of protocol data units, containing compressive (sic) data (46ᵢ),
- decompression of the said data (46ᵢ) corresponding, in a compressed form, to the data contained in the data fields (43ᵢ) of the source protocol data units (41ᵢ),
- restitution of the said first sequence of source protocol data units (41ᵢ).

18. Apparatus for data compression, of the type used in-a system for data transmission by exchange of protocol data units (41ᵢ) between at least one transmitting terminal (11_{A}) and at least one receiving terminal (11_{B}), each of the said protocol data units (41ᵢ) comprising a header field (42ᵢ) and a data field (43ᵢ),
characterised in that it comprises means (18ᵢ) for compression, in at least one direction of data transmission and for at least one communication, associating a second sequence of M protocol data units to be transmitted (51_{D}, 51_{E}) with a first sequence of N source protocol data units (41_{A}, 41_{B}, 41_{C}), M being less than or equal to N, the said compression means (18ᵢ) comprising:
- means (75) for data compression, in accordance with at least one compression algorithm, ensuring compression of data contained in the data fields (43ᵢ) of at least two of the said source protocol data units (41ᵢ);
- means (80) for generation of reconstruction data (47ᵢ) enabling reconstruction of the said first sequence of source protocol data units (41ᵢ) from the said second sequence of protocol data units to be transmitted (51ᵢ);
- means (82) for concatenation of compressed data (46ᵢ) and reconstruction data (47ᵢ), to form a sequence of concatenated data, and for slicing the said sequence of concatenated data into data elements (34); and
- means (84) for transmission of protocol units to be transmitted, each protocol unit to be transmitted (51ᵢ) containing at least one of the said data elements (34).

19. Apparatus according to Claim 18, characterised in that it comprises means (19ᵢ) for decompression of data compressed by the said compression means (18ᵢ), the said decompression means comprising:
- means for separation of the said reconstruction data (47ᵢ) and the said data elements (34) contained in the said protocol units to be transmitted (51ᵢ);
- decompression means symmetrical to the said data compression means (75), producing decompressed source data; and
- means for reconstruction of the said source protocol units from the said decompressed source data and as a function of the said reconstruction data (47ᵢ).

20. Apparatus according to either of Claims 18 and 19, characterised in that it comprises, on the one hand, means for connection to at least one transmitting/receiving terminal, behaving similarly to the data transmission system, and, on the other hand, means for connection to the said data transmission system, behaving similarly to a transmitting/receiving terminal.

21. Apparatus according to either of Claims 18 and 19, characterised in that it is integrated with one of the said terminals or with an element of a communications network interconnecting the said terminals.
